# EUROPEAN PATENT APPLICATION

(11) **EP 4 255 013 A1**
(43) Date of publication of application: **04.10.2023**
(21) Application number: 21930796.4
(22) Date of filing: 18.03.2021
(51) Int. Cl.: H04W 24/08

(54) **INFORMATION PROCESSING METHOD, TERMINAL DEVICE, AND NETWORK DEVICE**

(71) Applicant: GUANGDONG OPPO MOBILE TELECOMMUNICATIONS CORP., LTD., Dongguan City, Guangdong 523860 (CN)
(72) Inventor: LIU, Yang, Dongguan, Guangdong 523860 (CN); FAN, Jiangsheng, Dongguan, Guangdong 523860 (CN)
(74) Representative: Ipside
(86) International application number: PCT/CN2021/081418
(87) International publication number: WO 2022/193203

(57) **Abstract**

The disclosure relates to methods for information processing, terminal devices, and network devices. The method for information processing includes that a terminal device sends information on a minimization of drive tests (MDT) configuration to a network device. The network device receives the information on the MDT configuration sent by the terminal device. In the implementations of the disclosure, the information on the MDT configuration of the terminal device is sent to the network device, so that the network device can accurately know the MDT configuration of the terminal device in time, thereby selecting a suitable candidate terminal.

## Description

### TECHNICAL FIELD

The disclosure relates to the field of communications, and in particular, to methods for information processing, terminal devices, and network devices.

### BACKGROUND

Minimization of drive tests (MDT) is for a communication system to achieve automatic collection and analysis of a user equipment (UE) measurement report including location information, which can reduce the workload of manual drive tests. Various types of MDT configurations can be configured for UE. How to avoid overriding between different types of MDT configurations needs to be considered.

### SUMMARY

Implementations of the disclosure provide methods for information processing, terminal devices, and network devices, which can avoid overriding between different types of MDT configurations.

Implementations of the disclosure provide a method for information processing. The method includes that a terminal device sends information on a minimization of drive tests (MDT) configuration to a network device.

Implementations of the disclosure provide a method for information processing. The method includes that a network device receives information on an MDT configuration sent by a terminal device.

Implementations of the disclosure provide a terminal device. The terminal device includes a sending unit configured to send information on an MDT configuration to a network device.

Implementations of the disclosure provide a network device. The network device includes a receiving unit configured to receive information on an MDT configuration sent by a terminal device.

Implementations of the disclosure provide a terminal device. The terminal device includes a processor and a memory. The memory is configured to store a computer program. The processor is configured to invoke and run the computer program stored in the memory, to enable the terminal device to perform the forgoing method for information processing executed by the terminal device.

Implementations of the disclosure provide a network device. The network device includes a processor and a memory. The memory is configured to store a computer program. The processor is configured to invoke and run the computer program stored in the memory, to enable the network device to perform the forgoing method for information processing executed by the network device.

Implementations of the disclosure provide a chip configured to realize the forgoing methods for information processing.

Specifically, the chip includes a processor configured to invoke and run a computer program in a memory, to enable a device equipped with the chip to perform the forging methods for information processing.

Implementations of the disclosure provide a computer-readable storage medium storing a computer program which, when executed by a device, enables the device to perform the forgoing methods for information processing.

Implementations of the disclosure provide a computer program product including computer program instructions. The computer program instructions enable a computer to perform the forgoing methods for information processing.

Implementations of the disclosure provide a computer program which, when run on a computer, enables the computer to perform the foregoing methods for information processing.

According to the implementations of the disclosure, the information on the MDT configuration of the terminal device is sent to the network device, so that the network device can accurately know the MDT configuration of the terminal device in time, thereby selecting a suitable candidate terminal device. Therefore, overriding between different types of MDT configurations may be avoided.

### BRIEF DESCRIPTION OF THE DRAWINGS

FIG. 1 is a schematic diagram of an application scenario according to implementations of the disclosure.
FIG. 2 is a flow chart illustrating an example of a management-based minimization of drive tests (MDT) method.
FIG. 3 is a schematic flow chart of a method for information processing according to an implementation of the disclosure.
FIG. 4 is a schematic flow chart of a method for information processing according to another implementation of the disclosure.
FIG. 5 is a flow chart of example 1 of a method for information processing according to another implementation of the disclosure.
FIG 6 is a flow chart of example 2 of a method for information processing according to another implementation of the disclosure.
FIG. 7 is a schematic block diagram of a terminal device according to an implementation of the disclosure.
FIG. 8 is a schematic block diagram of a terminal device according to another implementation of the disclosure.
FIG. 9 is a schematic block diagram of a network device according to an implementation of the disclosure.
FIG. 10 is a schematic block diagram of a network device according to another implementation of the disclosure.
FIG. 11 is a schematic block diagram of a communication device according to an implementation of the disclosure.
FIG. 12 is a schematic block diagram of a chip according to an implementation of the disclosure.
FIG. 13 is a schematic block diagram of a communication system according to an implementation of the disclosure.

### DETAILED DESCRIPTION

The following describes technical solutions in implementations of the disclosure with reference to accompanying drawings in the implementations of the disclosure.

The technical solutions of the implementations of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a fifth-generation (5G) system, or other communication systems.

Generally speaking, a conventional communication system generally supports a limited number of connections and therefore is easy to implement. However, with development of communication technology, a mobile communication system not only supports conventional communication but also supports, for example, device to device (D2D) communication, machine to machine (M2M) communication, machine type communication (MTC), vehicle to vehicle (V2V) communication, or vehicle to everything (V2X) communication. The implementations of the disclosure can also be applied to these communication systems.

Optionally, a communication system in the implementations of the disclosure can be applicable to a carrier aggregation (CA) scenario, a dual connectivity (DC) scenario, and a standalone (SA) scenario.

Optionally, the communication system in the implementations of the disclosure may be applied to an unlicensed spectrum. The unlicensed spectrum may also be considered as a shared spectrum. Alternatively, the communication system in the implementations of the disclosure may also be applied to a licensed spectrum. The licensed spectrum may also be considered as an unshared spectrum.

The implementations of the disclosure describe various implementations in conjunction with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user apparatus.

The terminal device may also be a station (ST) in the WLAN, a cellular radio telephone, a cordless telephone, a session initiation protocol (SIP) telephone, a wireless local loop (WLL) station, a personal digital assistant (PDA). The terminal device may also be a device with wireless communication functions such as a handheld device, a computing device, other processing devices coupled with a wireless modem, an in-vehicle device, a wearable device, or a terminal device in a next-generation communication system such as an NR network, a terminal device in a future evolved public land mobile network (PLMN), etc.

In the implementations of the disclosure, the terminal device can be deployed on land, including indoor or outdoor, handheld, wearable, or vehicle-mounted; on water (e.g., a ship); and also in the air (e.g., an aircraft, a balloon, and a satellite).

In the implementations of the disclosure, the terminal device may be a mobile phone, a pad, a computer with wireless transceiving functions, a terminal device for virtual reality (VR), a terminal device for augmented reality (AR), a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

As an example but not limitation, in the implementations of the disclosure, the terminal device may also be a wearable device. The wearable device may also be called a wearable smart device, which is a collective name of wearable devices intelligently designed and developed by applying a wearable technology to daily wear, such as glasses, gloves, watches, clothing, shoes, etc. The wearable device is a portable device that can be worn directly on the body or integrated into clothing or accessories of a user. The wearable device not only is a hardware device but also can realize powerful functions through software support, data interaction, and cloud interaction. Broadly speaking, the wearable smart device includes a device that has full functions and a large size and can realize all or part of functions without relying on a smart phone, e.g., a smart watch, smart glasses, or the like, and includes a device that only focuses on a certain application function and needs to be used with other devices such as a smart phone, e.g., all kinds of smart bracelets and smart jewelry for physical sign monitoring or the like.

In the implementations of the disclosure, the network device may be a device that can communicate with a mobile device. The network device may be an access point (AP) in the WLAN, a base transceiver station (BTS) in the GSM or CDMA system, or a NodeB (NB) in the WCDMA system. Alternatively, the network device may be an evolved NodeB (eNB or eNodeB), a relay station, an AP, an in-vehicle device, or a wearable device in the LTE system, or a network device or a generation NodeB (gNB) in the NR network, a network device in the future evolved PLMN, or a network device in the NTN network.

As an example but not limitation, in the implementations of the disclosure, the network device may have a mobility, e.g., the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station deployed on land, on water, or on other locations.

In the implementations of the disclosure, the network device can provide a service for a cell, and the terminal device can communicate with the network device through transmission resources (e.g., frequency-domain resources or spectrum resources) for the cell, where the cell may be a cell corresponding to the network device (e.g., a base station). The cell may belong to a macro base station or a base station corresponding to a small cell, where the small cell may include a metro cell, a micro cell, a pico cell, a femto cell, or the like. These small cells have features of small coverage and low transmission power and are suitable for providing high-speed data transmission services.

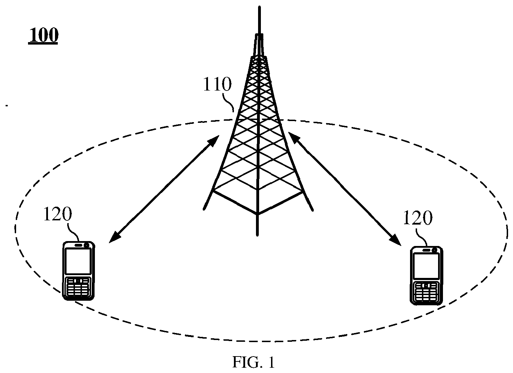

FIG. 1 exemplarily illustrates a communication system 100. The communication system includes a network device 110 and two terminal devices 120. Optionally, the communication system 100 may include multiple network devices 110, and in the coverage of each network device 110 other numbers of terminal devices 120 may be included, which is not limited in the implementations of the disclosure.

Optionally, the communication system 100 may further include other network entities such as a mobility management entity (MME), an access and mobility management function (AMF), and the implementations of the disclosure are not limited thereto.

The network device may further include an access network device and a core network device, that is, the wireless communication system further includes multiple core networks for communicating with the access network device. The access network device may be an evolutional node B (eNB or e-Node B for short), a macro base station, a micro base station (also referred to as a "small base station"), a pico base station, an AP, a transmission point (TP), or a new generation node B (gNodeB) in an LTE system, a next generation (NR) system, or an authorized auxiliary access long-term evolution (LAA-LTE) system.

It is to be understood that a device having a communication function in a network/system in the implementations of the disclosure may be referred to as a communication device. Taking the communication system illustrated in FIG. 1 as an example, the communication device may include a network device and a terminal device having a communication function, where the network device and the terminal device may be specific devices in the implementations of the disclosure, and details are not repeatedly described herein. The communication device may further include other devices in the communication system, for example, a network controller, an MME, and other network entities, which are not limited in the implementations of the disclosure.

It can be understood that, the terms "system" and "network" in this disclosure are often used interchangeably. The term "and/or" in this disclosure is simply an illustration of an association relationship of associated objects, indicating that three relationships may exist, for example, A and/or B, which may indicate the existence of A alone, A and B together, and B alone. In addition, the character "/" in this disclosure generally indicates that associated objects are in an "or" relationship.

It can be understood that, the "indication" referred to in the implementations of the disclosure may be a direct indication, an indirect indication, or an indication indicating an associated relation. For example, A indicates B, which may mean that A indicates B directly, e.g., B can be obtained through A, may mean that A indicates B indirectly, e.g., A indicates C, and B can be obtained through C, or may further mean that A and B have an associated relation.

In illustration of the implementations of the disclosure, the term "correspondence" may represent a direct correspondence or indirect correspondence between the two, may represent an associated relation between the two, or may further represent a relation of indicating and being indicated, a relation of configuring and being configured, or other relations.

In order to facilitate understanding of the technical solutions of the implementations of the disclosure, the following describes the related technology of the implementations of the disclosure. The following related technology, as an optional solution, may be arbitrarily combined with the technical solutions of the implementations of the disclosure, all of which belong to the scope of protection of the implementations of the disclosure.

### (I) Management- based minimization of drive tests (MDT) method

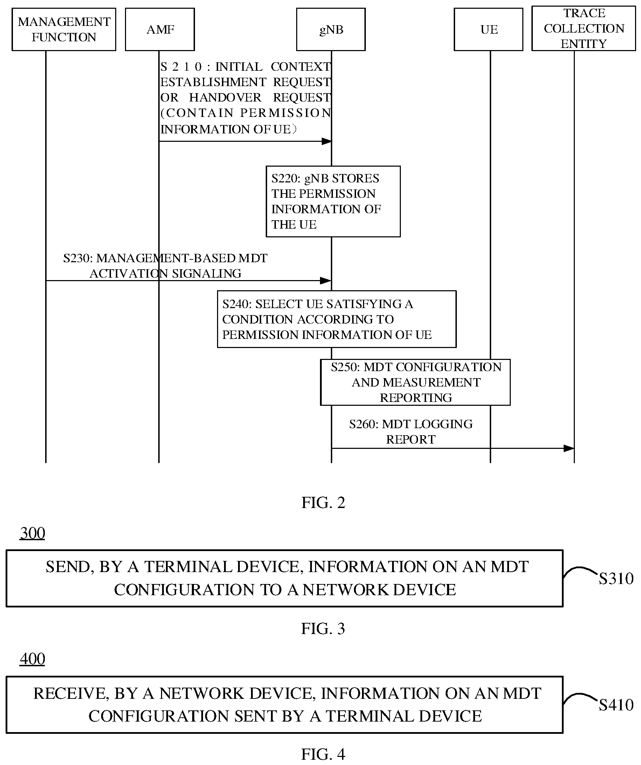

For example, referring to FIG. 2, a management-based MDT method may include the following.

At S210, when an AMF is to send an initial context establishment request or a handover request related to each user equipment (UE) to a base station, such as a 5G base station (gNodeB, gNB), the AMF makes permission information of each UE related to MDT be carried and sent to the gNB, so as to inform the gNB whether the UE allows MDT.

At S220, the gNB stores the permission information of each UE.

At S230, a management function (MF) sends management-based MDT activation signaling to the gNB.

At S240, the gNB selects a UE satisfying a condition according to permission information of each UE in a connected state in coverage of the gNB.

At S250, the gNB sends a MDT configuration to the UE through radio resource control (RRC) signaling, and the UE performs logging measurement according to the MDT configuration and reports an MDT report to the gNB.

At S260, the gNB sends the MDT report reported by the UE, in the form of an MDT logging report, to a core network element for report collection, such as a trace collection entity.

### (II) Signal-based MDT method

In the signal-based MDT method, the core network directly sends an MDT configuration of a target UE to the base station. For example, the core network directly sends the MDT configuration of the target UE to the base station in the case of network problems such as that the target UE always feeds back a problem of poor signals. The base station then forwards the MDT configuration to the target UE. In the signal-based MDT method, the base station does not need to check permission information of the UE.

### (III) A management-based MDT configuration is not allowed to override a signal-based MDT configuration

The management-based MDT configuration and the signal-based MDT configuration may be different in a target PLMN list, a target area, a carrier frequency of a target logging measurement, a sensor-name list (bluetooth, wireless fidelity (WiFi)), a logging duration, and the like. Since the signal-based MDT configuration is specifically configured for a certain UE, it means that the network wants to collect some measurements of the UE the network is interested in. However, if the signal-based MDT configuration is overridden by the management-based MDT configuration, such purpose cannot be achieved, and thus it may be specified that the management-based MDT configuration is not allowed to override the signal-based MDT configuration.

In order to realize that the management-based MDT configuration is not allowed to override the signal-based MDT configuration, a network-based method may be used. Specifically, a base station that previously sent the signal-based MDT configuration sends relevant information to a base station to which the UE will move. When the UE enters an idle state, the base station releases UE context. Since the UE context contains information indicating that the UE has the signal-based MDT configuration and logging duration, the information indicating that the UE has the signal-based MDT configuration and the logging duration will be released by the base station where the UE is located before the UE enters the idle state, and cannot be transferred to a base station where the UE is located when the UE returns to a connected state from the idle state. Therefore, the base station where the UE is located before the UE enters the idle state is required to send the information related to the signal-based MDT configuration to the core network for storing, and then the core network sends, at a suitable time, the information to the base station where the UE is located when the UE returns to the connected state. However, the network-based method is too complex, and a lot of network resources may be occupied.

FIG. 3 is a schematic flow chart of a method 300 for information processing according to an implementation of the disclosure. The method may optionally be applied to the system illustrated in FIG. 1, but is not limited thereto. The method includes at least part of the following.

At S310, a terminal device sends information on an MDT configuration to a network device. Specifically, the terminal device may send the information on the MDT configuration to the network device when the terminal device moves to coverage of the network device. In the implementations of the disclosure, the network device may also be referred to as a serving network device, for example, the serving network device may be a new base station to which the terminal device needs to access.

Exemplarily, when the terminal device moves from coverage of one network device to coverage of another network device, the terminal device may be disconnected from an original network device and establish a connection with a new network device. In this case, the terminal device may need to enter the idle state, and may send the information on the MDT configuration of the terminal device to the new network device, where the terminal device moves to the coverage of the new network device. A network device, for example, a base station, can accurately know the MDT configuration currently in the terminal device. Therefore, in the case that the terminal device has a certain MDT configuration which is not allowed to be overridden, the network device may not regard the terminal device as a candidate terminal device for receiving and/or applying other MDT configurations, thereby avoiding overriding between MDT configurations.

Optionally, the terminal device stores the information on the MDT configuration, so that even if the terminal device enters the idle state and the network device releases context of the terminal device, the terminal device can also obtain the information on the MDT configuration of the terminal device from the local storage. When the UE moves into coverage of a new network device, based on the coverage of the network device where the terminal device is located, the terminal device can send the information on the MDT configuration of the terminal device to the new network device to which the terminal device needs to access.

Optionally, the information on the MDT configuration indicates whether the terminal device has a first type of MDT configuration.

Exemplarily, in the case that the terminal device moves into the coverage of the network device, the information on the MDT configuration sent to the network device may indicate that the terminal device has the first type of MDT configuration, or may indicate that the terminal device does not have the first type of MDT configuration. When the network device knows that the terminal device has the first type of MDT configuration, the network device may not regard the terminal device as a candidate terminal device for receiving and/or applying other MDT configurations, thereby avoiding overriding the first type of MDT configuration.

Optionally, the first type of MDT configuration is a signal-based MDT configuration.

Exemplarily, in the case that the terminal device moves into the coverage of the network device, the information on the MDT configuration sent to the network device may indicate that the terminal device has the signal-based MDT configuration, or may indicate that the terminal device does not have the signal-based MDT configuration. When the network device knows that the terminal device has the signal-based MDT configuration, the network device may not regard the terminal device as a candidate terminal device for receiving and/or applying other MDT configurations, thereby avoiding overriding the signal-based MDT configuration.

Optionally, in the case that the information on the MDT configuration indicates that the terminal device has the first type of MDT configuration, the information on the MDT configuration is used to instruct the network device not to regard the terminal device as a candidate terminal device for receiving and/or applying a second type of MDT configuration.

Exemplarily, the terminal device moves into the coverage of the network device, and the information on the MDT configuration sent to the network device indicates that the terminal device has the first type of MDT configuration. When the network device knows that the terminal device has the first type of MDT configuration, the network device may not regard the terminal device as a candidate terminal device for receiving and/or applying the second type of MDT configuration, thereby avoiding overriding of the first type of MDT configuration by the second type of MDT configuration.

Optionally, in the case that the information on the MDT configuration indicates that the terminal device does not have the first type of MDT configuration, the information on the MDT configuration is used to instruct the network device to regard the terminal device as a candidate terminal device for receiving and/or applying the second type of MDT configuration.

Exemplarily, the terminal device moves into the coverage of the network device, and the information on the MDT configuration sent to the network device indicates that the terminal device does not have the first type of MDT configuration. When the network device knows that the terminal device does not have the first type of MDT configuration, the network device can regard the terminal device as a candidate terminal device for receiving and/or applying the second type of MDT configuration.

Optionally, the second type of MDT configuration is a management-based MDT configuration.

Exemplarily, in the case that the terminal device moves into the coverage of the network device, the information on the MDT configuration sent to the network device may indicate that the terminal device has the signal-based MDT configuration, or may indicate that the terminal device does not have the signal-based MDT configuration. When the network device knows that the terminal device has the signal-based MDT configuration, the network device may not regard the terminal device as a candidate terminal device for receiving and/or applying the management-based MDT configuration, thereby avoiding overriding of the signal-based MDT configuration by the management-based MDT configuration.

Optionally, the information on the MDT configuration includes time information related to the MDT configuration.

Exemplarily, the terminal device may store information indicating whether the terminal device has the first type of MDT configuration. The terminal device may store the time information related to the MDT configuration. The terminal device may store the information indicating whether the terminal device has the first type of MDT configuration and the time information related to the MDT configuration.

Exemplarily, the terminal device may send the information indicating whether the terminal device has the first type of MDT configuration to the network device, for example, the information indicating whether the terminal device has the first type of MDT configuration may be indicated through an indication bit(s), and the network device may be explicitly informed of whether the terminal device has the first type of MDT configuration. The terminal device may also send information including the time information related to the MDT configuration to the network device, and the network device is implicitly informed of that the terminal device has the first type of MDT configuration. In the case that the information sent does not include the time information related to the MDT configuration, it may indicate that the terminal device does not have the first type of MDT configuration. The terminal device may also send to the network device the information indicating that the terminal device has the first type of MDT configuration and the time information related to the MDT configuration.

Optionally, the time information related to the MDT configuration includes at least one of remaining time before expiration of a duration timer, or start time and total running duration of the duration timer.

For example, the duration timer may be T331, which may indicate logging duration.

Optionally, the terminal device determines whether the first type of MDT configuration is expired based on the time information.

Exemplarily, the terminal device determines whether the signal-based MDT configuration is expired based on the remaining time before expiration of the duration timer. For example, the remaining time of 0 indicates expiration of the signal-based MDT configuration.

Exemplarily, the terminal device determines whether the signal-based MDT configuration is expired based on the start time and the total running duration of the duration timer. For example, when running duration from the start time to the current time is equal to or greater than the total running duration, it indicates that the signal-based MDT configuration is expired.

Optionally, in the case that the first type of MDT configuration is expired, the information on the MDT configuration sent by the terminal device indicates that the terminal device does not have the first type of MDT configuration.

Exemplarily, when the terminal device determines that the signal-based MDT configuration of the terminal device is expired, the information on the MDT configuration sent to the network device may indicate that the terminal device does not have the signal-based MDT configuration. When the network device knows that the terminal device does not have the signal-based MDT configuration, the network device may regard the terminal device as a candidate terminal device for receiving and/or applying the management-based MDT configuration.

Optionally, the terminal device sends the time information related to the MDT configuration to the network device.

Exemplarily, the terminal device can also send the time information related to the MDT configuration to the network device such as a base station for maintenance.

Optionally, the time information is used to instruct the network device to determine whether the first type of MDT configuration is expired.

Exemplarily, the network device, for example, the base station, may perform timing based on the time information related to the MDT configuration, to determine whether the first type of MDT configuration of the terminal device is expired. For example, the base station determines whether the signal-based MDT configuration of the terminal device is expired based on the remaining time before expiration of the duration timer. If the remaining time is 0, it indicates that the signal-based MDT configuration is expired.

Exemplarily, the network device, for example, the base station, may determine whether the first type of MDT configuration of the terminal device is expired, based on the start time and the total running duration of the duration timer. For example, when the base station determines that the running duration from the start time to the current time is equal to or longer than the total running duration, the base station may determine that the signal-based MDT configuration of the terminal device is expired.

Optionally, when the terminal device is about to enter an idle state, the terminal device receives update information of the time information from the network device.

Exemplarily, when the terminal device intends to leave the coverage of the network device, it means that the terminal device intends to enter the idle state. In the case that the network device maintains the time information related to the MDT configuration of the terminal device, the network device may send the update information of the time information to the terminal device, for example, the current remaining time of the duration timer, or the current running duration of the duration timer. Upon receiving the update information, the terminal device may locally maintain the time information related to the MDT configuration of the terminal device. The terminal device may also send the current time information of the MDT configuration of the terminal device to a new network device when moving to coverage of the new network device.

For example, when UE_1 intends to leave gNB_1, gNB_1 sends update information of the signal-based MDT configuration to UE_1, i.e., the remaining time of the duration timer is 10s. UE_1 starts to maintain the remaining time by itself, and after 2s, sends to gNB_2 which is newly accessed by UE_1 information indicating that UE_1 has the signal-based MDT configuration and the current remaining time of the duration timer which is 8s.

Optionally, the update information is contained in a radio resource control (RRC) release signaling such as RRCConnectionRelease.

Optionally, the information on the MDT configuration is carried through RRC signaling.

Optionally, the RRC signaling includes, but is not limited to, at least one of RRCResumeComplete, RRCSetupComplete, RRCReconfigurationComplete, or UEassistanceinformation.

In the implementations of the disclosure, the information on the MDT configuration of the terminal device is sent to the network device, so that the network device can accurately know the MDT configuration of the terminal device in time, thereby selecting a suitable candidate terminal device. Therefore, overriding between different types of MDT configurations may be avoided.

For example, since the terminal device may store the information on whether the terminal device has the signal-based MDT configuration, when the terminal device needs to enter the idle state, the terminal device can send to the network device the information on whether the terminal device has the signal-based MDT configuration, so that the network device can accurately know whether the terminal device currently has the signal-based MDT configuration or not. Therefore, in the case that the terminal device has the signal-based MDT configuration, the network device may not regard the terminal device as a candidate terminal device for receiving and/or applying the management-based MDT configuration, thereby avoiding overriding of the signal-based MDT configuration by the management-based MDT configuration.

FIG. 4 is a schematic flow chart of a method 400 for information processing according to an implementation of the disclosure. The method may optionally be applied to the system illustrated in FIG. 1, but is not limited thereto. The method includes at least part of the following.

At S410, a network device receives information on an MDT configuration sent by a terminal device. Specifically, the network device may receive the information on the MDT configuration sent by the terminal device when the terminal device moves into coverage of the network device.

Optionally, the network device may first send the information on the MDT configuration of the terminal device to the terminal device. For example, a base station adds a type of information into RRC signaling carrying the MDT configuration to inform the UE whether the MDT configuration is the management-based MDT configuration or the signal-based MDT configuration.

Optionally, the information on the MDT configuration indicates whether the terminal device has a first type of MDT configuration.

Optionally, the first type of MDT configuration is a signal-based MDT configuration.

Optionally, in the case that the information on the MDT configuration indicates that the terminal device has the first type of MDT configuration, the network device does not regard the terminal device as a candidate terminal device for receiving and/or applying a second type of MDT configuration.

Optionally, in the case that the information on the MDT configuration indicates that the terminal device does not have the first type of MDT configuration, the network device may regard the terminal device as a candidate terminal device for receiving and/or applying the second type of MDT configuration.

Optionally, the second type of MDT configuration is a management-based MDT configuration.

Optionally, in the case that the terminal device determines that the first type of MDT configuration is expired based on time information related to the MDT configuration, the information on the MDT configuration received by the network device indicates that the terminal device does not have the first type of MDT configuration.

Optionally, the information on the MDT configuration includes the time information related to the MDT configuration.

Exemplarily, the time information related to the MDT configuration received by the network device may indicate whether the terminal device has the first type of MDT configuration, may include the time information related to the MDT configuration, or may include the information indicating whether the terminal device has the first type of MDT configuration and the time information related to the MDT configuration.

Optionally, the network device determines whether the first type of MDT configuration is expired based on the time information.

Optionally, when the terminal device is about to enter an idle state, the network device sends update information of the time information to the terminal device.

Optionally, the update information is contained in RRC release signaling.

Optionally, the time information may include at least one of remaining time before expiration of the duration timer, or start time and total running duration of the duration timer.

Optionally, the information on the MDT configuration is carried through RRC signaling.

Optionally, the RRC signaling includes, but is not limited to, at least one of RRCResumeComplete, RRCSetupComplete, RRCReconfigurationComplete, or UEassistanceinformation.

For a specific example of the method 400 executed by the network device in the disclosure, reference may be made to the related information about the network device such as the base station in the foregoing method 300, and for brevity, details are not repeatedly described herein.

In an application example, the implementations of the disclosure provide a method for information processing executed by a terminal device, which can avoid overriding of the signal-based MDT configuration by the management-based MDT configuration. The terminal device stores and informs the current serving base station of the information indicating that the terminal device has the signal-based MDT configuration and logging duration, such that when the network device configures the management-based MDT configuration, a case that the network device regards the terminal device configured with the signal-based MDT configuration as a candidate terminal device can be avoided.

The following are several specific examples.

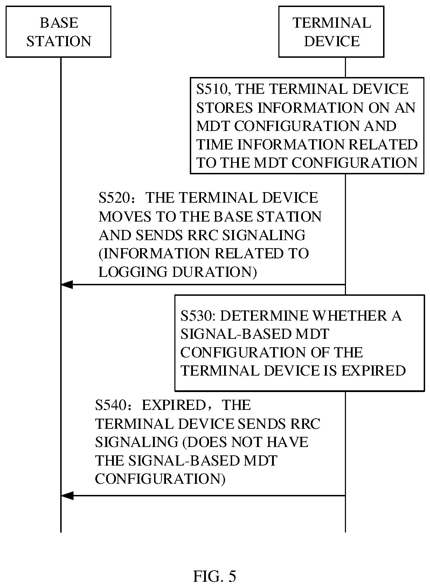

Referring to FIG. 5, in example 1, the method may include the following.

At S510, a terminal device stores information on an MDT configuration and time information related to the MDT configuration, for example, the terminal device stores information indicating that the terminal device has a signal-based MDT configuration, and maintains timer information related to logging duration.

For example, the timer information related to the logging duration may include at least one of: option 1: remaining time before expiration of a duration timer; or option 2: start time and total running time of the duration timer.

At S520, in the case that the terminal device currently has the signal-based MDT configuration, when moving to a new base station, the terminal device may send the information indicating that the terminal device has the signal-based MDT configuration to the network device such as the new base station through RRC signaling. Examples of RRC signaling include: RRCResumeComplete, RRCSetupComplete, RRCReconfigurationComplete, UEassistanceinformation, and the like.

At S530, the terminal device determines whether the signal-based MDT configuration of the terminal device is expired based on the time information related to the MDT configuration. For example, the terminal device no longer has the signal-based MDT configuration in the case that logging duration related to the signal-based MDT configuration is expired.

At S540, in the case that the signal-based MDT configuration is expired, the terminal device may send information indicating that the terminal device no longer has the signal-based MDT configuration to the network device such as the new base station through RRC signaling (e. g., UEassistanceinformation). Before receiving RRC signaling for update, the base station regards that it is not suitable to configure the management-based MDT configuration for the terminal device. After receiving RRC signaling for update, the base station may regard the terminal device as a suitable candidate terminal device for which the management-based MDT configuration can be configured.

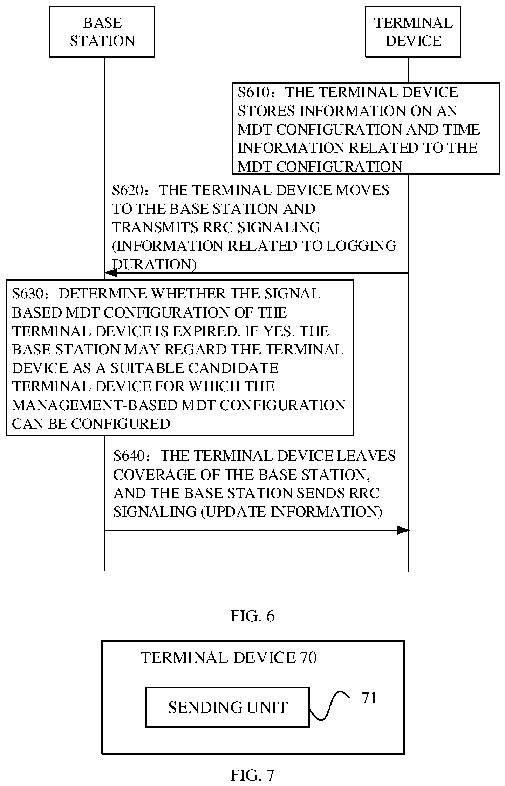

Referring to FIG. 6, in Example 2, the method may specifically include the following.

At S610, a terminal device stores information on an MDT configuration and time information related to the MDT configuration, for example, the terminal device stores information indicating that the terminal device has a signal-based MDT configuration. The terminal device may also store and maintain timer information related to logging duration.

For example, the timer information related to the logging duration may include at least one of: option 1: a remaining time before expiration of a duration timer; or option 2: start time and total running duration of the duration timer.

At S620, in the case that the terminal device currently has the signal-based MDT configuration, when the terminal device moves to a new base station, the terminal device may send information related to the logging duration to the network device through RRC signaling, or may explicitly or implicitly inform the network device that the terminal device has the signal-based MDT configuration. Examples of RRC signaling include, but are not limited to, RRCResumeComplete, RRCSetupComplete, RRCReconfigurationComplete, UEassistanceinformation, etc. Optionally, a UE can decide whether to send to the base station the information indicating that the UE has the signal-based MDT configuration.

At S630, based on the obtained information, the network device, such as the base station, autonomously determines whether the signal-based MDT configuration of the terminal device is expired. If the signal-based MDT configuration is expired, the base station may regard the terminal device as a suitable candidate terminal device for which the management-based MDT configuration can be configured.

At S640, when the terminal device leaves coverage of the current base station and moves to coverage of another new base station, the current base station may send update information related to the MDT configuration to the terminal device, where the update information includes update information related to the logging duration.

In addition, at the network side, a type of information may be added to RRC signaling carrying the MDT configuration to inform the terminal device whether the MDT configuration is the management-based MDT configuration or the signal-based MDT configuration.

The terminal device stores and informs the current serving base station of information indicating that the terminal device is configured with the signal-based MDT configuration and the information related to the logging duration, such that when the network device configures the management-based MDT configuration, a case that the network device regards the terminal device configured with the signal-based MDT configuration as a candidate terminal device can be avoided.

FIG. 7 is a schematic block diagram of a terminal device 70 according to an implementation of the disclosure. The terminal device 70 may include a sending unit 71 configured to send information on an MDT configuration to a network device. Specifically, the sending unit 71 may send the information on the MDT configuration to the network device when the terminal device moves to coverage of the network device.

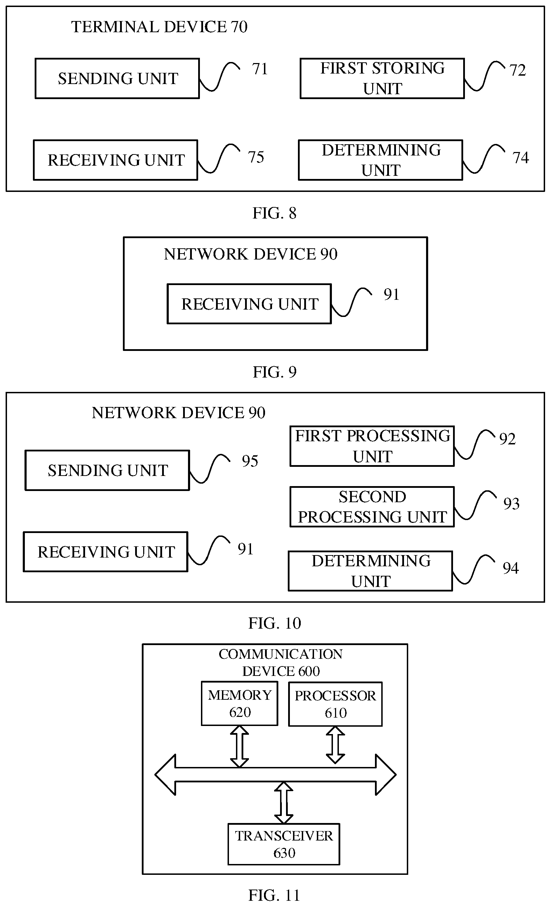

Optionally, as illustrated in FIG. 8, the terminal device further includes a storing unit 72 configured to store the information on the MDT configuration.

Optionally, the information on the MDT configuration indicates whether the terminal device has a first type of MDT configuration.

Optionally, the first type of MDT configuration is a signal-based MDT configuration.

Optionally, in the case that the information on the MDT configuration indicates that the terminal device has the first type of MDT configuration, the information on the MDT configuration is used to instruct the network device not to regard the terminal device as a candidate terminal device for receiving and/or applying a second type of MDT configuration.

Optionally, in the case that the information on the MDT configuration indicates that the terminal device does not have the first type of MDT configuration, the information on the MDT configuration is used to instruct the network device to regard the terminal device as a candidate terminal device for receiving and/or applying the second type of MDT configuration.

Optionally, the second type of MDT configuration is a management-based MDT configuration.

Optionally, the information on the MDT configuration includes time information related to the MDT configuration.

Exemplarily, the storing unit 72 may store information indicating whether the terminal device has the first type of MDT configuration, may store the time information related to the MDT configuration, or may store both the information indicating whether the terminal device has the first type of MDT configuration and the time information related to the MDT configuration.

Optionally, the terminal device further includes a determining unit 74 configured to determine whether the first type of MDT configuration is expired based on the time information.

Optionally, in the case that the first type of MDT configuration is expired, the information on the MDT configuration sent by the terminal device indicates that the terminal device does not have the first type of MDT configuration.

Optionally, the sending unit is further configured to send the time information related to the MDT configuration to the network device.

Optionally, the time information is used to instruct the network device to determine whether the first type of MDT configuration is expired.

Optionally, the terminal device further includes a receiving unit 75 configured to receive update information of the time information from the network device when the terminal device is about to enter an idle state.

Optionally, the update information is contained in RRC release signaling.

Optionally, the time information may include at least one of: remaining time before expiration of a duration timer, or start time and total running duration of the duration timer.

Optionally, the information on the MDT configuration is carried through RRC signaling.

Optionally, the RRC signaling includes, but is not limited to, at least one of RRCResumeComplete, RRCSetupComplete, RRCReconfigurationComplete, or UEassistance information.

The terminal device 70 in the implementations of the disclosure can implement corresponding functions of the terminal device in the foregoing method 300. For a procedure, a function, an implementation, and beneficial effects corresponding to each module (a sub-module, a unit, or a component) in the terminal device 70, reference may be made to the corresponding illustration in the foregoing method implementations, and details are not repeatedly described herein. It is to be noted that the functions described by the modules (sub-modules, units, or components) in the terminal device 70 in the implementations of the disclosure may be implemented by different modules (sub-modules, units, or components) or may be implemented by the same module (sub-module, unit, or component).

FIG. 9 is a schematic block diagram of a network device 90 according to an implementation of the disclosure. The network device 90 includes a receiving unit 91 configured to receive information on an MDT configuration sent by a terminal device. Specifically, the receiving unit 91 can receive the information on the MDT configuration sent by the terminal device when the terminal device moves to coverage of the network device.

Optionally, the information on the MDT configuration indicates whether the terminal device has a first type of MDT configuration.

Optionally, the first type of MDT configuration is a signal-based MDT configuration.

Optionally, as illustrated in FIG. 10, the network device further includes a first processing unit 92 configured to skip regarding the terminal device as a candidate terminal device for receiving and/or applying a second type of MDT configuration, in the case that the information on the MDT configuration indicates that the terminal device has the first type of MDT configuration.

Optionally, the network device further includes a second processing unit 93 configured to regard the terminal device as a candidate terminal device for receiving and/or applying the second type of MDT configuration, in the case that the information on the MDT configuration indicates that the terminal device does not have the first type of MDT configuration.

Optionally, the second type of MDT configuration is a management-based MDT configuration.

Optionally, the information on the MDT configuration includes time information related to the MDT configuration.

Exemplarily, the information on the MDT configuration received by the receiving unit may indicate whether the terminal device has the first type of MDT configuration, may include the time information related to the MDT configuration, or may include both information indicating whether the terminal device has the first type of MDT configuration and the time information related to the MDT configuration.

Optionally, in the case that the terminal device determines that the first type of MDT configuration is expired based on the time information related to the MDT configuration, the information on the MDT configuration received by the network device indicates that the terminal device does not have the first type of MDT configuration.

Optionally, the network device further includes a determining unit 94 configured to determine whether the first type of MDT configuration is expired based on the time information.

Optionally, the network device further includes a sending unit 95 configured to send update information of the time information to the terminal device when the terminal device is about to enter an idle state.

Optionally, the update information is contained in RRC release signaling.

Optionally, the time information may include at least one of: remaining time before expiration of a duration timer, or start time and total running duration of the duration timer.

Optionally, the information on the MDT configuration is carried through RRC signaling.

Optionally, the RRC signaling includes, but is not limited to, at least one of RRCResumeComplete, RRCSetupComplete, RRCReconfigurationCcomplete, or UEassistanceinformation.

The network device 90 in the implementations of the disclosure can implement the corresponding functions of the network device in the foregoing method 400. For a procedure, a function, an implementation, and beneficial effects corresponding to each module (a sub-module, a unit, a component, or the like) in the network device 90, reference may be made to the corresponding illustration in the foregoing method implementations, and details are not repeatedly described herein. It is to be noted that the functions described by the modules (sub-modules, units, or components) in the network device 90 in the implementations of the disclosure may be implemented by different modules (sub-modules, units, or components) or may be implemented by the same module (sub-module, unit, or component).

FIG. 11 is a schematic structural diagram of a communication device 600 according to an implementation of the disclosure. The communication device 600 includes a processor 610, and the processor 610 may invoke and run a computer program in a memory, so that the communication device 600 implements the method in the implementations of the disclosure.

Optionally, the communication device 600 may further include a memory 620, where the processor 610 may invoke and run a computer program in the memory 620, so that the communication device 600 implements the method in the implementations of the disclosure.

The memory 620 may be a separate component independent of the processor 610, or may be integrated in the processor 610.

Optionally, the communication device 600 may further include a transceiver 630. The processor 610 can control the transceiver 630 to communicate with other devices, and specifically, can send information or data to other devices or receive information or data sent by other devices.

The transceiver 630 may include a transmitter and a receiver. The transceiver 630 can further include one or more antennas.

Optionally, the communication device 600 may be the network device according to the implementations of the disclosure, and the communication device 600 may implement corresponding processes implemented by the network device in the methods according to the implementations of the disclosure. For brevity, details are not described herein again.

Alternatively, the communication device 600 may be the terminal device according to the implementations of the disclosure, and the communication device 600 may implement corresponding processes implemented by the terminal device in the methods according to the implementations of the disclosure. For brevity, details are not described herein again.

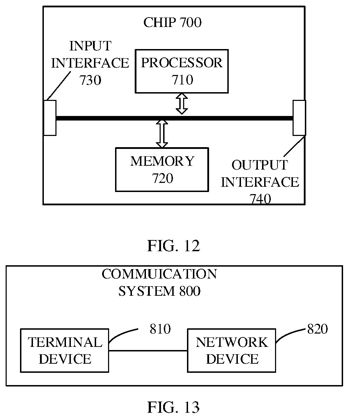

FIG. 12 is a schematic structural diagram of a chip 700 according to implementations of the disclosure. The chip 700 includes a processor 710. The processor 710 may invoke and run a computer program in a memory, so as to implement the methods in the implementations of the disclosure.

Optionally, the chip 700 may further include a memory 720. The processor 710 can invoke and run a computer program in the memory 720 to implement the methods executed by the terminal device or the network device in the implementations of the disclosure.

The memory 720 may be a separate component independent of the processor 710, or may be integrated in the processor 710.

Optionally, the chip 700 may further include an input interface 730. The processor 710 can control the input interface 730 to communicate with other devices or chips, and specifically, can obtain information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the implementations of the disclosure, and the chip may implement a corresponding process implemented by the network device in each method in the implementations of the disclosure, which is not described herein again for brevity.

Optionally, the chip may be applied to the terminal device in the implementations of the disclosure, and the chip may implement a corresponding process implemented by the terminal device in each method in the implementations of the disclosure, which is not described herein again for brevity.

The chips applied to the network device and the terminal device may be the same or different.

It is to be understood that the chip mentioned in the implementations of the disclosure may also be referred to as a system-level chip, a system chip, a chip system, a system-on-chip, or the like.

The foregoing processor may be a general processor, a digital signal processor (DSP), a field programmable gate array (FPGA), an application specific integrated circuit (ASIC), or another programmable logic device, a transistor logic device, a discrete hardware component, or the like. The general processor may be a microprocessor or any conventional processor.

The memory mentioned above may be a volatile memory or a non-volatile memory, or may include both a volatile memory and non-volatile memory. The non-volatile memory may be a read-only memory (ROM), a programmable ROM (PROM), an erasable PROM (EPROM), an electrically erasable PROM (EEPROM), or a flash memory. The volatile memory may be a random access memory (RAM).

It is to be understood that the foregoing memories are exemplary but not limitative illustrations. For example, the memory in the implementations of the disclosure may also be a static RAM (SRAM), a dynamic RAM (DRAM), a synchronous DRAM (SDRAM), a double data rate SDRAM) (DDR SDRAM), an enhanced SDRAM (ESDRAM), and a synchronous link DRAM (SDRAM), and a direct rambus RAM (DR RAM), etc. That is to say, the memory in the implementations of the disclosure is intended to include, but not limited to, these and any other suitable types of memory.

FIG. 13 is a schematic block diagram of a communication system 800 according to implementations of the disclosure. The communication system 800 includes a terminal device 810 and a network device 820.

The terminal device 810 is configured to send information on the MDT configuration to the network device when the terminal device moves into a coverage of the network device.

The network device 820 is configured to receive the information on the MDT configuration sent by the terminal device when the terminal device moves into the coverage of the network device.

The terminal device 810 may be configured to implement corresponding functions implemented by the terminal device in the foregoing methods, and the network device 820 may be configured to implement corresponding functions implemented by the network device in the foregoing methods. For brevity, details are not described herein again.

All or a part of the implementations described above may be implemented by software, hardware, firmware, or any combination thereof. When implemented using software, all or a part of the implementations may be implemented in the form of a computer program product including one or more computer instructions. When the computer program instructions are loaded and executed on the computer, all or a part of procedures or functions are generated according to the implementations of the disclosure. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be from a website, computer, server, or data center through a wired manner (e. g., coaxial cable, fiber optics, digital subscriber line (DSL)) or wireless manner (e. g., infrared, wireless, microwave, etc.) to another website, computer, server, or data center. The computer-readable storage medium may be any usable medium that can be accessed by a computer, or a data storage device such as a server, a data center, or the like that includes one or more usable media arrays. The usable medium may be a magnetic medium, (e. g., floppy disk, hard disk, magnetic tape), an optical medium (e. g., DVD), or a semiconductor medium (e. g., solid state disk (SSD)), or the like.

It is to be understood that, in various implementations of the disclosure, a sequence number of each of the foregoing processes does not imply an execution sequence, and an execution sequence of each process should be determined according to a function and an internal logic of the process, which should not constitute any limitation to an implementation process of the implementations of the disclosure.

It may be clearly understood by a person skilled in the art that, for the purpose of convenient and brief description, for a detailed working process of the foregoing system, apparatuses, and units, reference may be made to a corresponding process in the foregoing method implementations, and details are not described herein again.

The foregoing illustrations are merely specific implementations of the disclosure, but are not intended to limit the scope of protection of the present disclosure. Any variation or replacement readily derived by a person skilled in the art within the technical scope disclosed in the disclosure shall belong to the scope of protection of the disclosure. Therefore, the scope of protection of the disclosure should be subject to the scope of protection of the claims.

## Claims

1. A method for information processing, comprising:
sending, by a terminal device, information on minimization of drive tests (MDT) configuration to a network device.

2. The method of claim 1, further comprising:
storing, by the terminal device, the information on the MDT configuration.

3. The method of claim 1 or 2, wherein the information on the MDT configuration indicates whether the terminal device has a first type of MDT configuration.

4. The method of claim 3, wherein the first type of MDT configuration is a signal-based MDT configuration.

5. The method of claim 3 or 4, wherein on condition that the information on the MDT configuration indicates that the terminal device has the first type of MDT configuration, the information on the MDT configuration is used to instruct the network device not to regard the terminal device as a candidate terminal device for receiving and/or applying a second type of MDT configuration.

6. The method of any one of claims 3 to 5, wherein on condition that the information on the MDT configuration indicates that the terminal device does not have the first type of MDT configuration, the information on the MDT configuration is used to instruct the network device to regard the terminal device as a candidate terminal device for receiving and/or applying a second type of MDT configuration.

7. The method of claim 5 or 6, wherein the second type of MDT configuration is a management-based MDT configuration.

8. The method of any one of claims 1 to 7, wherein the information on the MDT configuration comprises time information related to the MDT configuration.

9. The method of claim 8, further comprising:
determining, by the terminal device, whether a first type of MDT configuration is expired based on the time information.

10. The method of claim 9, wherein on condition that the first type of MDT configuration is expired, the information on the MDT configuration sent by the terminal device indicates that the terminal device does not have the first type of MDT configuration.

11. The method of any one of claims 1 to 7, further comprising:
sending, by the terminal device, time information related to the MDT configuration to the network device.

12. The method of claim 11, wherein the time information is used to instruct the network device to determine whether a first type of MDT configuration is expired.

13. The method of claim 11 or 12, further comprising:
receiving, by the terminal device, update information of the time information from the network device, when the terminal device is about to enter an idle state.

14. The method of claim 13, wherein the update information is contained in radio resource control (RRC) release signaling.

15. The method of any one of claims 8 to 14, wherein the time information comprises at least one of:
remaining time before expiration of a duration timer; or
start time and total running duration of the duration timer.

16. The method of any one of claims 1 to 15, wherein the information on the MDT configuration is carried through RRC signaling.

17. The method of claim 16, wherein the RRC signaling comprises at least one of:
RRCResumeComplete;
RRCSetupComplete;
RRCReconfigurationComplete; or
user equipment (UE)assistanceinformation.

18. A method for information processing, comprising:
receiving, by a network device, information on a minimization of drive tests (MDT) configuration sent by a terminal device.

19. The method of claim 18, wherein the information on the MDT configuration indicates whether the terminal device has a first type of MDT configuration.

20. The method of claim 19, wherein the first type of MDT configuration is a signal-based MDT configuration.

21. The method of claim 19 or 20, further comprising:
skipping regarding, by the network device, the terminal device as a candidate terminal device for receiving and/or applying a second type of MDT configuration, on condition that the information on the MDT configuration indicates that the terminal device has the first type of MDT configuration.

22. The method of any one of claims 19 to 21, further comprising:
regarding, by the network device, the terminal device as a candidate terminal device for receiving and/or applying a second type of MDT configuration, on condition that the information on the MDT configuration indicates that the terminal device does not have the first type of MDT configuration.

23. The method of claim 21 or 22, wherein the second type of MDT configuration is a management-based MDT configuration.

24. The method of any one of claims 18 to 23, wherein on condition that the terminal device determines that a first type of MDT configuration is expired based on time information related to the MDT configuration, the information on the MDT configuration received by the network device indicates that the terminal device does not have the first type of MDT configuration.

25. The method of any one of claims 18 to 23, wherein the information on the MDT configuration comprises time information related to the MDT configuration.

26. The method of claim 25, further comprising:
determining, by the network device, whether a first type of MDT configuration is expired based on the time information.

27. The method of claim 25 or 26, further comprising:
sending, by the network device, update information of the time information to the terminal device, when the terminal device is about to enter an idle state.

28. The method of claim 27, wherein the update information is contained in radio resource control (RRC) release signaling.

29. The method of any one of claims 24 to 28, wherein the time information comprises at least one of:
remaining time before expiration of a duration timer; or
start time and total running duration of the duration timer.

30. The method of any one of claims 18 to 29, wherein the information on the MDT configuration is carried through RRC signaling.

31. The method of claim 30, wherein the RRC signaling comprises at least one of:
RRCResumeComplete;
RRCSetupComplete;
RRCReconfigurationComplete; or
UEassistanceinformation.

32. A terminal device, comprising:
a sending unit configured to send information on a minimization of drive tests (MDT) configuration to a network device.

33. The terminal device of claim 32, further comprising:
a first storing unit configured to store the information on the MDT configuration.

34. The terminal device of claim 32 or 33, wherein the information on the MDT configuration indicates whether the terminal device has a first type of MDT configuration.

35. The terminal device of claim 34, wherein the first type of MDT configuration is a signal-based MDT configuration.

36. The terminal device of claim 34 or 35, wherein on condition that the information on the MDT configuration indicates that the terminal device has the first type of MDT configuration, the information on the MDT configuration is used to instruct the network device not to regard the terminal device as a candidate terminal device for receiving and/or applying a second type of MDT configuration.

37. The terminal device of any one of claims 34 to 36, wherein on condition that the information on the MDT configuration indicates that the terminal device does not have the first type of MDT configuration, the information on the MDT configuration is used to instruct the network device to regard the terminal device as a candidate terminal device for receiving and/or applying a second type of MDT configuration.

38. The terminal device of claim 36 or 37, wherein the second type of MDT configuration is a management-based MDT configuration.

39. The terminal device of any one of claims 32 to 38, wherein the information on the MDT configuration comprises time information related to the MDT configuration.

40. The terminal device of claim 39, further comprising:
a determining unit configured to determine whether a first type of MDT configuration is expired based on the time information.

41. The terminal device of claim 40, wherein on condition that the first type of MDT configuration is expired, the information on the MDT configuration sent by the terminal device indicates that the terminal device does not have the first type of MDT configuration.

42. The terminal device of any one of claims 32 to 38, wherein the sending unit is further configured to send time information related to the MDT configuration to the network device.

43. The terminal device of claim 42, wherein the time information is used to instruct the network device to determine whether a first type of MDT configuration is expired.

44. The terminal device of claim 42 or 43, further comprising:
a receiving unit configured to receive update information of the time information from a network device when the terminal device is about to enter an idle state.

45. The terminal device of claim 44, wherein the update information is contained in radio resource control (RRC) release signaling.

46. The terminal device of any one of claims 39 to 45, wherein the time information comprises at least one of:
remaining time before expiration of a duration timer; or
start time and total running duration of the duration timer.

47. The terminal device of any one of claims 32 to 46, wherein the information on the MDT configuration is carried through RRC signaling.

48. The terminal device of claim 47, wherein the RRC signaling comprises at least one of:
RRCResumeComplete;
RRCSetupComplete;
RRCReconfigurationComplete; or
user equipment (UE)assistanceinformation.

49. A network device, comprising:
a receiving unit configured to receive information on a minimization of drive tests (MDT) configuration sent by a terminal device.

50. The network device of claim 49, wherein the information on the MDT configuration indicates whether the terminal device has a first type of MDT configuration.

51. The network device of claim 50, wherein the first type of MDT configuration is a signal-based MDT configuration.

52. The network device of claim 50 or 51, further comprising:
a first processing unit configured to skip regarding the terminal device as a candidate terminal device for receiving and/or applying a second type of MDT configuration, on condition that the information on the MDT configuration indicates that the terminal device has the first type of MDT configuration.

53. The network device of any one of claims 50 to 52, further comprising:
a second processing unit configured to regard the terminal device as a candidate terminal device for receiving and/or applying a second type of MDT configuration, on condition that the information on the MDT configuration indicates that the terminal device does not have the first type of MDT configuration.

54. The network device of claim 52 or 53, wherein the second type of MDT configuration is a management-based MDT configuration.

55. The network device of any one of claims 49 to 54, wherein on condition that the terminal device determines that a first type of MDT configuration is expired based on time information related to the MDT configuration, the information on the MDT configuration received by the network device indicates that the terminal device does not have the first type of MDT configuration.

56. The network device of any one of claims 49 to 54, wherein the information on the MDT configuration comprises time information related to the MDT configuration.

57. The network device of claim 56, further comprising:
a determining unit configured to determine whether a first type of MDT configuration is expired based on the time information.

58. The network device of claim 56 or 57, further comprising:
a sending unit configured to send update information of the time information to the terminal device when the terminal device is about to enter an idle state.

59. The network device of claim 58, wherein the update information is contained in radio resource control (RRC) release signaling.

60. The network device of any one of claims 55 to 59, wherein the time information comprises at least one of:
remaining time before expiration of a duration timer; or
start time and total running duration of the duration timer.

61. The network device of any one of claims 49 to 60, wherein the information on the MDT configuration is carried through RRC signaling.

62. The network device of claim 61, wherein the RRC signaling comprises at least one of:
RRCResumeComplete;
RRCSetupComplete;
RRCReconfigurationComplete; or
user equipment (UE)assistanceinformation.

63. A terminal device comprising a processor and a memory, the memory being configured to store a computer program, and the processor being configured to invoke and run the computer program stored in the memory, to enable the terminal device to perform the method of any one of claims 1 to 17.

64. A network device comprising a processor and a memory, the memory being configured to store a computer program, and the processor being configured to invoke and run the computer program stored in the memory, to enable the network device to perform the method of any one of claims 18 to 31.

65. A chip comprising: a processor configured to invoke and run a computer program in a memory, to enable a device equipped with the chip to perform the method of any one of claims 1 to 17.

66. A chip comprising: a processor configured to invoke and run a computer program in a memory, to enable a device equipped with the chip to perform the method of any one of claims 18 to 31.

67. A computer-readable storage medium configured to store a computer program which, when executed by a device, enables the device to perform the method of any one of claims 1 to 17.

68. A computer-readable storage medium configured to store a computer program which, when executed by a device, enables the device to perform the method of any one of claims 18 to 31.

69. A computer program product comprising computer program instructions that cause a computer to perform the method of any one of claims 1 to 17.

70. A computer program product comprising computer program instructions that cause a computer to perform the method of any of claims 18 to 31.

71. A computer program causing a computer to perform the method of any one of claims 1 to 17.

72. A computer program causing a computer to perform the method of any one of claims 18 to 31.

73. A communication system comprising:
a terminal device configured to perform the method of any one of claims 1 to 17; and
a network device configured to perform the method of any one of claims 18 to 31.
